# EUROPÄISCHE PATENTSCHRIFT

(11) **EP 2 390 634 B1**
(45) Veröffentlichungstag und Bekanntmachung des Hinweises auf die Patenterteilung: **08.03.2017**
(21) Anmeldenummer: 11178743.8
(22) Anmeldetag: 06.12.2003
(51) Int. Cl.: G01F 23/296, B06B 1/02

(54) **Vorrichtung zum Betreiben einer schwingfähigen Einheit eines Vibrationsresonators**
Device for operating a vibrating unit of a vibration resonator
Dispositif de fonctionnement d'une unité pivotante d'un résonateur à vibrations

(30) Priorität: 13.12.2002 DE 10258736
(43) Veröffentlichungstag der Anmeldung: 30.11.2011
(62) Teilanmeldung aus: 03780132.1
(73) Patentinhaber: Endress + Hauser GmbH + Co. KG, 79689 Maulburg (DE)
(72) Erfinder: D'Angelico, Sascha, 79595 Rümmingen (DE)
(74) Vertreter: Andres, Angelika Maria

(56) Entgegenhaltungen:
- DE-A1- 19 621 449
- US-A- 3 800 170
- US-A- 4 578 650

## Beschreibung

Die Erfindung bezieht sich auf eine Vorrichtung zum Betreiben einer schwingfähigen Einheit eines Vibrationsresonators mit einem Piezoantrieb, der mit der schwingfähigen Einheit verbunden ist, und einer Rückkoppelelektronik, wobei die Rückkoppelelektronik den Piezoantrieb mittels eines periodischen Erregersignals mit ansteigenden und abfallenden Flanken zu Schwingungen anregt und wobei ein Antwortsignal des Piezoantriebs der Rückkoppelelektronik rückgeführt wird, und mit mindestens einer Peakkompensationseinheit, die mindestens ein Störsignal, das sich aus dem Umladevorgang des Piezoantriebs ergibt, aus dem Antwortsignal ausblendet.

Aus der Patentschrift DE 196 21 449 ist eine Vorrichtung bekannt, mit der ein Vibrations-Füllstand-Grenzschalter mit einem Vibrationsresonator betrieben werden kann, welcher in den Rückkopplungszweig eines selbsterregbaren Wandlersystems mit Verstärkeranordnung geschaltet ist. Dabei ist in dem Vibrationsresonator ein Piezoelement sowohl zur Schwingungserregung als auch zur Schwingungsdetektion vorgesehen. Bei dem Erregersignal der Verstärkeranordnung, mit dem das Piezoelement zu Schwingungen angeregt wird, handelt es sich um periodische Rechtecksignale. Während der Flanken des Erregersignals wird das Piezoelement umgeladen, was zu Umladesignalen im Antwortsignal des Piezoelements führt. Die in der Schrift vorgestellte Schaltung hat die Aufgabe, diese Umladesignale auszublenden und den Umladevorgang zeitlich zu minimieren. Für die Aufgabe des Ausblendens wird eine Steuerschaltung vorgestellt, die vom Erregersignal gesteuert wird und die den Ausgang des Piezoelements von der Verstärkeranordnung abkoppelt. Die Minimierung der Dauer des Umladevorgangs wird durch eine Ladestromregelschaltung erreicht, die ein virtuelles Bezugspotential erzeugt. Beide Schaltungen weisen u.a. OP-Verstärker und einen Halbleiterumschalter auf. Nachteilig an dieser Vorrichtung ist, dass es sich z.B. bei den zuvor genannten Bauteilen um relativ kostenintensive Bauteile handelt.

Eine alternative elektrische Schaltung zur Ausblendung von durch Umladevorgänge hervorgerufene Störsignale auszublenden ist aus der US4578650 bekannt geworden. Hier wird der Stromfluss durch einen Widerstand, über welchen das Ausgangssignal einer Treiberschaltung jeweils einem Aktuator zugeführt wird, zeitweise mittels einer Unterdrückungsschaltung unterbrochen, indem der Widerstand kurzgeschlossen wird.

Der Erfindung liegt die Aufgabe zugrunde, eine Vorrichtung anzugeben, mit der das Störsignal des Umladevorgangs aus dem Antwortsignal des Piezoantriebs ausgeblendet wird. Dies soll durch eine Ausgestaltung mit möglichst wenigen und preisgünstigen Bauteilen geschehen.

Die Erfindung beschreibt eine Vorrichtung zum Betreiben einer schwingfähigen Einheit eines Vibrationsresonators mit einem Piezoantrieb und einer Rückkoppelelektronik. Die Rückkoppelelektronik regt den Piezoantrieb mittels eines periodischen Erregersignals mit ansteigenden und abfallenden Flanken zu Schwingungen an. Dadurch wird die mechanisch schwingfähige Einheit, die mit dem Piezoantrieb verbunden ist, zu Schwingungen angeregt. Bei dem Erregersignal kann es sich in einer vorteilhaften Ausgestaltung um ein periodisches Rechtecksignal handeln. Möglich sind als mechanisch schwingfähige Einheit z.B. eine Schwinggabel oder ein Schwingstab. Durch die Schwingung der mechanisch schwingfähigen Einheit liefert der Piezoantrieb ein Antwortsignal, das der Rückkoppelelektronik rückgeführt wird. Dieses Antwortsignal setzt sich zusammen aus dem eigentlichen Schwingungsdetektionssignal und einem Störsignal. Das Schwingungsdetektionssignal lässt z.B. über die Frequenz Aussagen darüber zu, ob ein Füllstand von einem Medium in einem Behälter erreicht worden ist. Dafür wird ausgenutzt, dass sich die Resonanzfrequenz der schwingfähigen Einheit ändert, wenn sie von einem Medium bedeckt ist, im Vergleich zur Frequenz, wenn sie frei schwingt. Der andere Anteil im Antwortsignal ist ein Störsignal, das sich durch das Umladen des Piezoantriebs immer dann ergibt, wenn sich das Vorzeichen der Spannungsänderung ändert. Eine Änderung des Vorzeichens der Spannungsänderung bedeutet z.B. dass die Spannung von einem positiven zu einem negativen Vorzeichen wechselt und umgekehrt oder dass die Spannung von einem größeren zu einem kleineren Wert wechselt und umgekehrt. Das Umladen ist darauf zurückzuführen, dass der Piezoantrieb u.a. auch die Eigenschaft eines Kondensators aufweist. Dieses Signal zeigt einen deutlichen Anstieg und nimmt dann exponentiell ab, wobei die Zeitkonstante (t1) sich aus der Kapazität des Piezoantriebs und dem Gesamtwiderstand ergibt, mit dem der Piezoantrieb ein RC-Glied bildet. Sind die ansteigenden und abfallenden Flanken des Erregersignals sehr steil, so verkürzt sich der Zeitraum des Umladevorgangs. Das Abklingen des Störsignals ist jedoch, wie bereits erwähnt, durch die Bauteile gegeben. Somit ergeben sich auch das Hauptziel der Erfindung, indem das Störsignal herausgefiltert wird. Dies wird durch eine Peakkompensationseinheit erreicht, die das Störsignal, das sich aus dem Umladevorgang des Piezoantriebs ergibt, aus dem Antwortsignal ausblendet. Ein weiterer Vorteil der Peakkompensationseinheit ist, dass gleichzeitig die Dauer des Umladevorgangs des Piezoantriebs minimiert wird.

Die ganze Problematik entsteht dadurch, dass ein Piezoantrieb sowohl für die Schwingungsanregung als auch für die Schwingungsdetektion verwendet wird. Werden die Anregung und die Detektion durch zwei piezo-elektrische Elemente realisiert, so findet eine Verbindung der beiden Elemente nur durch die mechanisch schwingfähige Einheit statt. Dadurch hat das Umladesignal der anregenden Einheit nur zu vernachlässigende Auswirkungen auf die mechanisch schwingfähige Einheit und wird vor allem nicht von der detektierenden Einheit mitdetektiert. Somit ist bei getrennter Anregung und Detektion die Anwendung der Erfindung nicht erforderlich.

Die Aufgabe wird erfindungsgemäß dadurch gelöst, dass in der Peakkompensationseinheit mindestens eine Verstärkereinheit vorgesehen ist, die das Antwortsignal des Piezoantriebs verstärkt, und deren Verstärkungsfaktor durch das Erregersignal der Rückkoppelelektronik über mindestens zwei in der Peakkompensationseinheit vorgesehene Schaltelemente derart steuerbar ist, dass der Verstärkungsfaktor minimal ist während der ansteigenden und/oder während der abfallenden Flanken des Erregersignals. Ferner ist in der Peakkompensationseinheit mindestens ein Differenzierelement vorgesehen, an dem das Erregersignal anliegt und welches die Schaltelemente steuert, wobei die Ausgangsspannung des Differenzierelements die Ableitung des Erregersignals darstellt. Bei den Schaltelementen handelt es sich um elektrische Bauteile, die ihre Leitfähigkeit in Abhängigkeit von der Ausgangsspannung ändern. Erfindungsgemäß verbinden die Schaltelemente den Ausgang der Verstärkereinheit während der abfallenden bzw. ansteigenden Flanken mit dem Minuseingang der Verstärkereinheit leitend.

Die Grundidee dieser Lösung der Aufgabe ist also, dass das Antwortsignal verstärkt wird, wobei der Verstärkungsfaktor jedoch nicht konstant ist. Somit können die Peaks im Antwortsignal dadurch entfernt bzw. deren Auswirkung deutlich vermindert werden, dass die entsprechenden Abschnitte des Antwortsignals nur eine sehr geringe - möglichst eine minimale - Verstärkung erfahren im Vergleich zu den übrigen Abschnitten. Die Verstärkereinheit hebt also das Antwortsignal bis auf die Ausnahme der Abschnitte mit Umladesignal an. Die Verstärkereinheit kann dabei der eigentlichen Rückkoppelelektronik vorgelagert oder ein Bestandteil von ihr sein. Minimale Verstärkung bedeutet in diesem Zusammenhang, dass der Unterschied zwischen der Verstärkung während der Flanken und außerhalb der Flanken so groß ist, dass die Rückkoppelelektronik nicht oder zumindest nicht negativ von den mit den Flanken verbundenen Peaks beeinflußt wird.

Das Schaltelement steuert den Verstärkungsfaktor der Verstärkereinheit und wird selbst durch die Ableitung des Erregersignals gesteuert.

Die Abschnitte des Antwortsignals, in denen sich die Umladesignale finden, gelangen nicht zur Rückkoppelelektronik, indem sie durch die Peakkompensationseinheit, die durch das Erregersignal gesteuert wird, ausgeblendet werden. Entweder wird das Antwortsignal auf Masse gegeben oder die Verstärkung des Antwortsignals wird deutlich reduziert. Das Antwortsignal wird also quasi in beiden Ausgestaltungen mit einer Kamm-Funktion multipliziert, die mit Ausnahme der Abschnitte mit Peak konstant mit einem Wert ungleich Null und zu den Zeiten dieser Abschnitte Null oder zumindest sehr klein ist. Die Synchronisierung von Antwortsignal und dieser Funktion geschieht dadurch, dass das Erregersignal nicht nur an den Piezoantrieb, sondern auch an die Peakkompensationseinheit gegeben wird.

Eine Ausgestaltung sieht vor, dass es sich bei der Verstärkereinheit um einen Ladungsverstärker handelt. Diese Ausgestaltung liegt nahe, da der Piezoantrieb ein Stromsignal erzeugt. Weiterhin sind so keine Bauteile z.B. zur Umwandlung des Strom- in ein Spannungssignal notwendig.

Eine Ausgestaltung beinhaltet, dass der Verstärkungsfaktor während der ansteigenden und/oder während der abfallenden Flanken des Erregersignals annährend Null ist. Somit werden die Peaks fast vollständig aus dem Antwortsignal ausgeblendet. Die Verstärkung kann jedoch auch unter einem bestimmten Grenzwert liegen, der durch die Rückkoppelelektronik derart gegeben ist, dass störenden Effekte durch das Umladesignal nicht auftreten. Ist die Verstärkung während der Flanken annährend Null, so kann der Verstärkungsfaktor auch beispielsweise Eins sein.

Eine sehr einfache und kostenbewusste Ausgestaltung sieht vor, dass es sich bei dem Schaltelement um einen Halbleiterschalter, z.B. um einen Feldeffekttransistor allgemein oder speziell um einen MOSFET handelt. Zum Schutz des Schalterelements ist für das Schaltelement mindestens ein Schutzelement vorgesehen, dass das Schaltelement vor zu hohen Spannungen und/oder vor Spannungen mit dem Vorzeichen schützt, bei dem sich die Leitfähigkeit des Schaltelements nicht ändert, indem es nur Spannungen mit positivem oder negativem Vorzeichen zum Schaltelement gelangen lässt. Als Schutzelemente lassen sich beispielsweise Dioden verwenden, die je nach Vorzeichen der an ihnen anliegenden Spannung den Kondensator des RC-Glieds in den Differenzierelementen direkt gegen Masse kurzschließen, so dass das Signal des RC-Glieds am Schaltelement sehr schnell abnimmt.

Vorteilhaft ist eine Ausgestaltung, bei der es sich bei dem Erregersignal um ein periodisches Rechtecksignal oder um ein periodisches trapezförmiges Signal handelt. Durch die Steilheit der Flanken wird der Umladevorgang zeitlich stärker begrenzt als bei einem Erregersignal mit flachen Flanken. Der Nachteil eines Rechtecksignals besteht darin, dass auch Oberwellenresonanzen angeregt werden können. Dies wird bei trapezförmigen Signalen vermieden.

Die Erfindung wird anhand der nachfolgenden Zeichnungen näher erläutert. Es zeigt:
- Fig. 1:: ein Blockschaltbild des Vibrationsresonators;
- Fig. 2:: den zeitlichen Verlauf einiger Signale; und
- Fig. 3:: ein Blockschaltbild der einer Ausgestaltung der erfindungsgemäßen Vorrichtung.

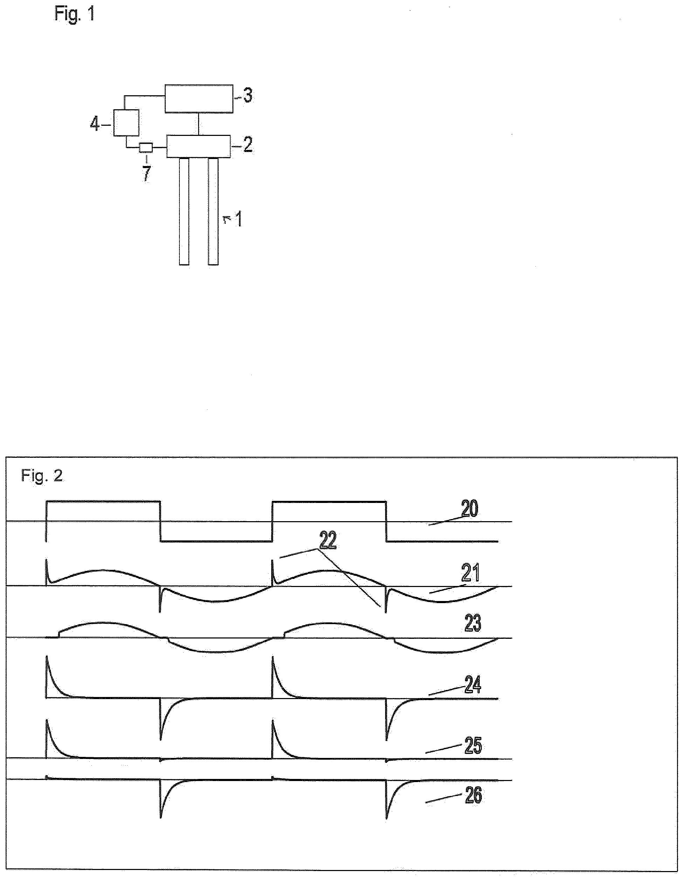

Figur 1 verdeutlicht den prinzipiellen Aufbau des Vibrationsresonators. Die schwingfähige Einheit 1 ist mit dem Piezoantrieb 2 verbunden. Dieser Piezoantrieb 2 wird durch die Rückkoppelelektronik 3 zu Schwingungen angeregt, wodurch wiederum die mechanisch schwingfähige Einheit 1 in Schwingung versetzt wird. Der Piezoantrieb 2 detektiert dann die Schwingungen der mechanisch schwingfähigen Einheit 1 und überträgt das Antwortsignal 21 über den Strom-zu-Spannungswandler 7 und die Peakkompensationseinheit 4 auf die Rückkoppelelektronik 3. Gezeigt ist für die mechanisch schwingfähige Einheit eine Schwinggabel, die Verwendung eines Schwingstabes wäre jedoch ebenfalls möglich.

Die Rückkoppelelektronik 3 erzeugt das Erregersignal 20, welches den Piezoantrieb 2 als Teil der schwingfähigen Einheit 1 zu Schwingungen anregt. Bei dem Erregersignal 20 handelt es sich hier um ein Rechtecksignal. Möglich sind auch trapezförmige Signale, die die Erregung von höheren Moden oder Oberwellen der mechanisch schwingfähigen Einheit vermeiden. Durch die Schwingungen ergibt sich ein Antwortsignal 21 des Piezoantriebs 2, welches der Rückkoppelelektronik 3 rückgeführt wird.

Während der Flanken des Erregersignals 20, d.h. durch die Änderung des Vorzeichens der Spannungsänderung, wird der Piezoantrieb 2 umgeladen, und es ergibt sich ein Umladestromverlauf, der mit der Zeitkonstanten t1 exponentiell abnimmt. Im Antwortsignal 21 zeigt sich dieser Peak als Störsignal 22. Die Zeitkonstante t1 berechnet sich aus der Kapazität des Piezoantriebs 2 und aus einem Gesamtwiderstand, mit dem der Piezoantrieb 2 ein RC-Glied bildet. Diese hohen Umladesignale stellen für die Auswertung des Antwortsignals 21 eine Störung dar; relevant ist nur das Nutzsignal der schwingfähigen Einheit 1, das das Schwingungsdetektionssignal ist und z.B. aus dessen Frequenz und Amplitude sich physikalische Größen des Mediums bestimmen lassen. Das Störsignal 22 ergibt sich aus den Größen der verwendeten Bauteile und liefert keine Information bzgl. der interessierenden Messung.

Das Differenzierelement 12 ist beispielsweise ein RC-Glied, das aus einem Kondensator 9 und einem Widerstand 10 besteht. Beim Schaltelement 6 und 14 handelt es sich jeweils um einen Halbleiterschalter, beispielsweise um einen MOSFET. Die Halbleiterschalter, die in der Erfindung verwendet werden, sind deutlich kostengünstiger als z.B. die im Patent DE 196 21 449. Beispielsweise kann es sich auch um die Feldeffekttransistoren 2N7002 oder TP061 0 handeln. Dies sind zwei Beispiele aus einer großen Auswahl.

Vorteile der Erfindung liegen darin, dass kostengünstige Bauteile verwendet werden, da u.a. auf OP-Verstärker, z.B. ein Analog-Schalter oder ein Exklusiv-Oder-Gatter verzichtet werden kann.

In Figur 2 sind die zeitlichen Verläufe der beteiligten Signale dargestellt. Das Erregersignal 20 ist im vorgestellten Fall ein Rechtecksignal mit steil ansteigenden und abfallenden Flanken. Bei der technischen Realisierung ergibt sich jedoch durch die Bauteile jeweils in Wirklichkeit eher ein trapezförmiger Verlauf. Das Antwortsignal 21 setzt sich zusammen aus dem Nutzsignal, das in diesem Fall sinusförmig ist, und den Störsignalen 22, die sich aus dem Umladen des Piezoantriebs 2 ergeben und welche exponentiell abnehmen. Durch die Peakkompensationseinheit 4 ergibt sich am Eingang der Rückkoppelelektronik 3 das Signal 23, aus welchem die Störsignale 22 ausgeblendet worden sind.

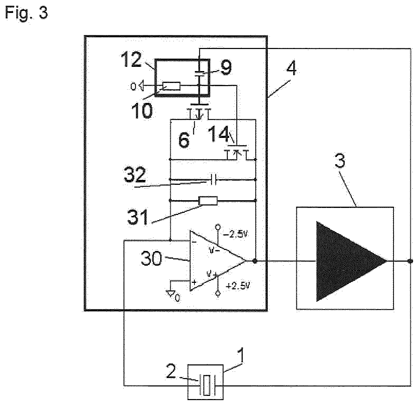

Fig. 3 zeigt die zweite Ausgestaltung der erfindungsgemäßen Lösung der Aufgabe. In der Peakkompensationseinheit 4 ist eine Verstärkereinheit 30 vorgesehen, die das Antwortsignal 21 des Piezoantriebs 2 verstärkt. In der einfachsten Ausgestaltung handelt es sich bei der Verstärkereinheit 30 um einen Ladungsverstärker. Der Verstärkungsfaktor wird durch das Erregersignal 20 der Rückkoppelelektronik 3 gesteuert. Wie in der obigen Ausgestaltung wird das Erregersignal 20 auf das Differenzierelement 12 gegeben, welches ein RC-Glied - bestehend aus einem Kondensator 9 und einem Widerstand 10 gegen Masse - ist und welches das Signal 24 als Ableitung des Erregersignals 20 erzeugt. Die Schaltelemente 6, 14 sind - wie oben bereits ausgeführt - jeweils so beschaffen, dass sie während der abfallenden bzw. ansteigenden Flanken ihre Leitfähigkeit ändern und somit den Ausgang der Verstärkereinheit 30 mit dem Minuseingang leitend verbinden. Der Verstärkungsfaktor hängt dabei u.a. vom ohmschen Widerstand ab, der durch das Widerstandsbauteil 31, durch den Kondensator 31 - der zur Glättung dient - und durch die Schaltelemente 6, 14 gegeben ist. Wird durch die Ableitung des Erregersignals 20 eines der Schaltelemente 6, 14 geschlossen, so fällt dieser gesamte Widerstandwert auf Null und somit geht auch der Verstärkungsfaktor auf Null. Wie lange der Verstärkungsfaktor Null ist, hängt von der Dimensionierung des RC-Gliedes 12 ab. Dies ist ebenfalls entsprechend zur ersten Ausgestaltung der Erfindung (siehe Fign. 2 und 3 und die entsprechenden Beschreibungen). Die weitere Ausgestaltung der Schaltung in Fig. 5 kann ebenfalls mindestens ein Schutzelement 15 beinhalten. Weitere Details liegen der fachlich qualifizierten Person nahe.

### Bezugszeichenliste

- 1: Schwingfähige Einheit
- 2: Piezoantrieb
- 3: Rückkoppelelektronik
- 4: Peakkompensationseinheit
- 6: Schaltelement
- 7: Strom-zu-Spannungswandler
- 9: Kondensator
- 10: Widerstand
- 12: Differenzierelement

- 20: Erregersignal
- 21: Antwortsignal
- 22: Störsignal
- 23: Signal an der Rückkoppelelektronik
- 24: Signal des Differenzierelements
- 25: Signal des Differenzierelements
- 26: Signal des Differenzierelements

- 30: Verstärkereinheit
- 31: Widerstand
- 32: Kondensator

## Patentansprüche

1. Vorrichtung zum Betreiben einer schwingfähigen Einheit (1) eines Vibrationsresonators
mit einem Piezoantrieb (2), der mit der schwingfähigen Einheit (1) verbunden ist, und einer Rückkoppelelektronik (3),
wobei die Rückkoppelelektronik (3) den Piezoantrieb (2) mittels eines periodischen Erregersignals (20) mit ansteigenden und abfallenden Flanken zu Schwingungen anregt und
wobei ein Antwortsignal (21) des Piezoantriebs (2) der Rückkoppelelektronik (3) rückgeführt wird, und
mit mindestens einer Peakkompensationseinheit (4), die mindestens ein Störsignal (22), das sich aus dem Umladevorgang des Piezoantriebs (2) ergibt, aus dem Antwortsignal (21) ausblendet,
wobei in der Peakkompensationseinheit (4) mindestens eine Verstärkereinheit (30) vorgesehen ist, die das Antwortsignal (21) des Piezoantriebs (2) verstärkt,
und deren Verstärkungsfaktor durch das Erregersignal (20) der Rückkoppelelektronik (3) über mindestens zwei in der Peakkompensationseinheit (4) vorgesehene Schaltelemente (6, 14) derart steuerbar ist, dass der Verstärkungsfaktor minimal ist während der ansteigenden und/oder während der abfallenden Flanken des Erregersignals (20),
wobei in der Peakkompensationseinheit (4) mindestens ein Differenzierelement (12, 18) vorgesehen ist, an dem das Erregersignal (20) anliegt und welches die Schaltelemente (6, 14) steuert,
wobei die Ausgangsspannung des Differenzierelements (12, 18) die Ableitung des Erregersignals (20) darstellt, und
wobei es sich bei den Schaltelementen (6, 14) um elektrische Bauteile handelt, die ihre Leitfähigkeit in Abhängigkeit von der Ausgangsspannung ändern **dadurch gekennzeichnet,**
**dass** die Schaltelemente den Ausgang der Verstärkereinheit während der abfallenden bzw. ansteigenden Flanken mit dem Minuseingang der Verstärkereinheit leitend verbinden.

2. Vorrichtung nach Anspruch 1,
**dadurch gekennzeichnet,**
**dass** es sich bei der Verstärkereinheit (30) um einen Ladungsverstärker handelt.

3. Vorrichtung nach Anspruch 1 oder 2,
**dadurch gekennzeichnet,**
**dass** der Verstärkungsfaktor während der ansteigenden und/oder während der abfallenden Flanken des Erregersignals (20) annährend Null ist.

## Claims

1. Apparatus for operating a unit that is able to vibrate (1) of a vibration resonator,
with a piezoelectric drive (2), which is connected to the unit (1) that is able to vibrate and feedback electronics (3),
wherein the feedback electronics (3) excite the piezoelectric drive (2) to vibrate using a periodic excitation signal (20) with rising and falling edge, and wherein a response signal (21) of the piezoelectric drive (2) is returned to the feedback electronics (3), and
with at least one peak compensation unit (4), which masks at least one interference signal (22), resulting from the recharging process of the piezoelectric drive (2), from the response signal,
wherein at least one amplifier unit (30) is provided in the peak compensation unit (4), said amplifier unit amplifying the response signal (21) of the piezoelectric drive (2), and whose amplification factor can be controlled by the excitation signal (20) of the feedback electronics (3), via at least two switching units (6, 14) provided in the peak compensation unit (4), in such a way that the amplification factor is minimal during the rising and/or during the falling edges of the excitation signal (20),
wherein the peak compensation unit (4) contains at least one differentiator element (12, 18) to which the excitation signal (20) is applied and which controls the switching elements (6, 14),
wherein the output voltage of the differentiator element (12, 18) represents the derivative of the excitation signal (20), and
wherein the switching elements (6, 14) are electrical components that change their conductivity depending on the output voltage,
**characterized in that**
the switching elements establish a conductive connection between the output of the amplification unit and the negative input of the amplification unit during the rising and falling edges.

2. Apparatus as claimed in Claim 1,
**characterized in that**
the amplification unit (30) is a charge amplifier.

3. Apparatus as claimed in Claim 1 or 2,
**characterized in that**
the amplification factor is close to zero during the rising and/or during the falling edges of the excitation signal (20).

## Revendications

1. Dispositif destiné à l'exploitation d'une unité apte à vibrer (1) d'un résonateur de vibrations,
avec un entraînement piézoélectrique (2), qui est relié avec l'unité apte à vibrer (1), et une électronique de rétroaction (3),
l'électronique de rétroaction (3) excitant en vibrations l'entraînement piézoélectrique (2) au moyen d'un signal d'excitation (20) périodique avec des fronts montants et descendants, et
un signal de réponse (21) de l'entraînement piézoélectrique (2) de l'électronique de rétroaction (3) étant réacheminé, et
avec au moins une unité de compensation de crête (4), qui supprime du signal de réponse au moins un signal parasite (22) résultant du processus de recharge de l'entraînement piézoélectrique (2),
dispositif pour lequel est prévu, dans l'unité de compensation de crête (4), au moins une unité d'amplification (30) destinée à amplifier le signal de réponse (21) de l'entraînement piézoélectrique (2), et dont le facteur d'amplification peut être commandé par le signal d'excitation (20) de l'électronique de rétroaction (3) par l'intermédiaire d'au moins deux éléments de commutation (6, 14) prévus dans l'unité de compensation de crête (4), de telle sorte que le facteur d'amplification soit minimal pendant les fronts montants et/ou pendant les fronts descendants du signal d'excitation (20),
dispositif pour lequel est prévu, dans l'unité de compensation de crête (4), au moins un élément différenciateur (12, 18) auquel est appliqué le signal d'excitation (20) et lequel commande les éléments de commutation (6, 14),
la tension de sortie de l'élément différenciateur (12, 18) représentant la dérivée du signal d'excitation (20), et
les éléments de commutation (6, 14) étant des composants électriques modifiant leur conductivité en fonction de la tension de sortie,
**caractérisé**
**en ce que** les éléments de commutation établissent une liaison conductrice, pendant les fronts descendants ou montants, entre la sortie de l'unité d'amplification et l'entrée négative de l'unité d'amplification.

2. Dispositif selon la revendication 1,
**caractérisé**
**en ce que** concernant l'unité d'amplification (30), il s'agit d'une amplificateur de charge.

3. Dispositif selon la revendication 1 ou 2,
**caractérisé**
**en ce que** le facteur d'amplification est environ égal à zéro pendant les fronts montants et/ou pendant les fronts descendants du signal d'excitation (20).
